# EUROPEAN PATENT SPECIFICATION

(11) **EP 0 571 875 B1**
(45) Date of publication and mention of the grant of the patent: **17.04.1996**
(21) Application number: 93108079.0
(22) Date of filing: 18.05.1993
(51) Int. Cl.: B61K 9/04, G01K 13/08

(54) **A rolling bearing temperature gauging device**
Vorrichtung zur Messung der Temperatur eines Wälzlagers
Dispositif de mesure de la température d'un palier à roulement

(30) Priority: 29.05.1992 IT TO920461
(43) Date of publication of application: 01.12.1993
(73) Proprietor: SKF INDUSTRIE S.P.A., I-10123 Torino (IT)
(72) Inventor: Bertorelli, Dario, I-10027 Testona, Torino (IT); Genero, Matteo, I-10026 Santena, Torino (IT); De Ponte, Aniello, I-10100 Torino (IT); Moretti, Roberto, I-10021 Cambiano, Torino (IT)
(74) Representative: Lotti, Giorgio

(56) References cited:
- DE-A- 2 106 371
- FR-A- 1 188 967
- FR-A- 1 341 647

## Description

The present invention falls within the field of rolling contact bearings, and more particularly relates to a device for gauging the temperature of conical bearings, which are particularly suitable for application on railway vehicle axles.

Correct operation of this kind of bearings is of primary importance for obvious reasons of safety and economy, so it is important to check their condition very frequently. The first symptom of anomalous operation is a rise in temperature, which is strictly connected to undesirable friction occurring. Due to the fact that a possible superheating may be gauged only during operation, the technique that is actually known provides infrared ray devices that are located at railway sides and read the temperature of the axle boxes while a train passes by.

These systems, that are diffused sporadically on the railway network, have turned out to be unreliable and expensive. Also, they are not able to perform continuous control.

FR-A-1 188 967 discloses a temperature gauging device for rolling bearings, in particular for use on railway vehicle axles. The gauging device comprises a temperature sensor located within the non-rotating race of the bearing and electrically connected to on-board temperature indicator means.

It is an object of this invention to provide a monitoring and diagnosing device on board of the train for measuring continuously the bearing temperature. The device is not only for use during testing stages but during normal operation of the bearing.

The above and further objects and advantages, which will be more apparent hereinafter, are attained according to the invention by a temperature gauging device for rolling bearings, in particular for use on railway vehicle axles, the bearing comprising a sealing annular shield fixed to the stationary race of the bearing, the temperature gauging device comprising a sensor electrically connected to on-board temperature indicator means; characterised in that the sensor is mounted to said sealing shield by an interposed support adapted for removing said sensor from said sealing shield.

A preferred but not-limiting embodiment of the device according to the invention is described hereinafter with reference to the accompanying drawings, in which:
- Figure 1: is a partial section view of a conical bearing provided with a device according to the invention;
- Figure 2: is a perspective exploded view of a few components of the sensor of Fig. 1 to an enlarged scale;
- Figure 3: is a section view of a component of Fig. 2 to a further enlarged scale;
- Figure 4: is a side view of a component of the device according to this invention; and
- Figure 5: is a partial axial section view of a conical bearing fitted with an alternative embodiment of the device of this invention.

The solution to the above mentioned problems basically consists in gauging the temperature of a component of the bearing by permanently fixing a temperature sensor thereto. The sensor, which is connected to an on-board instrumentation through suitable cables, indicates continuously the bearing temperature to the operator. Therefore, the operator can be immediately aware of any possible irregular running, that necessarily produces a rise in temperature.

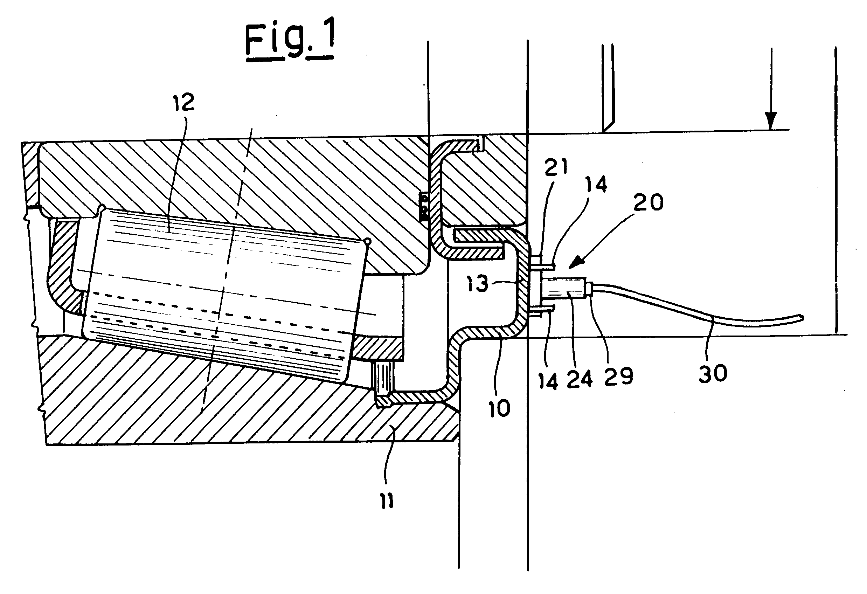

Referring at first to Figure 1, an annular sealing shield 10 of mild steel is interference fitted on the outer stationary race 11 of a bearing with tapered rollers 12, of the type usually mounted on railway vehicles.

According to the invention, a temperature gauging device, indicated as a whole by numeral 20, is fixed on the outer radial wall of the annular shield 10.

Two parallel threaded pins 14 for fixing the gauging device 20 extend axially from the wall 13.

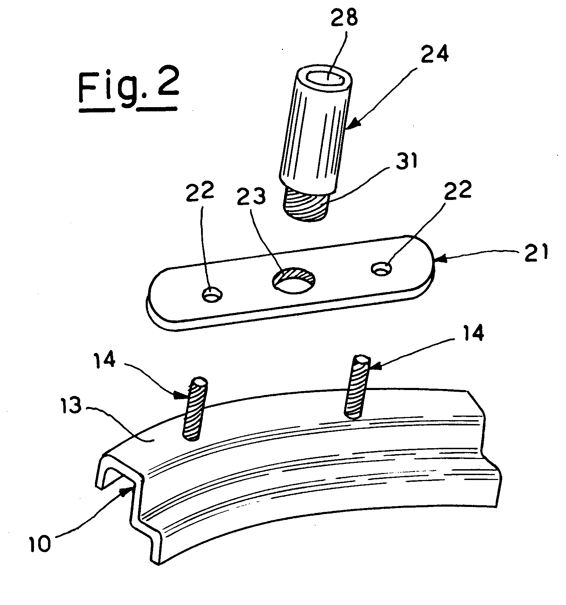

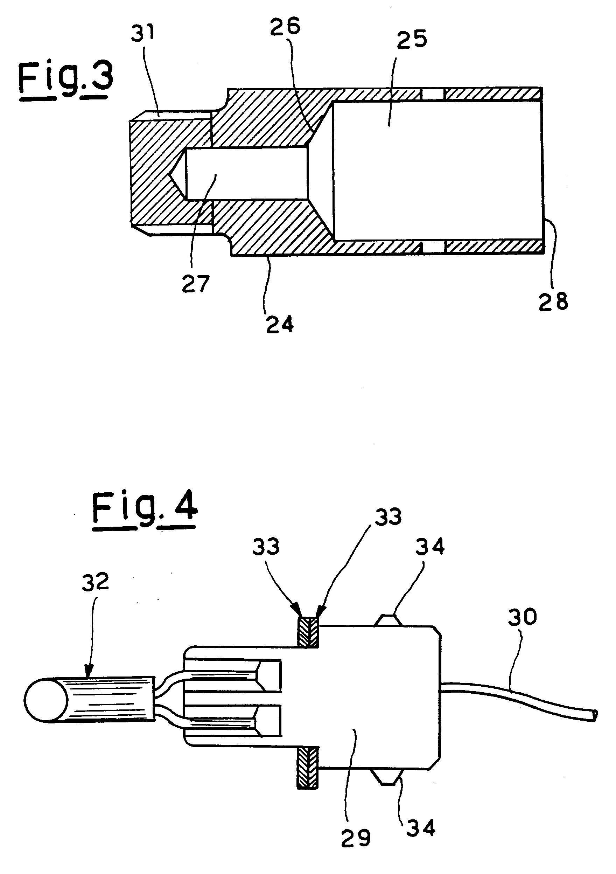

Referring to Figure 2, a shoe 21, preferably made of copper, consists of a flattened and elongated body. Two circular holes 22 are obtained in the shoe proximate to the ends thereof for allowing the pins 14 to pass through, while a circular threaded hole 23 is provided in the central portion of the shoe to form a seat for a cylindrical hollow support 24. This support, of which an axial cross section is shown in fig. 3, comprises a threaded portion 31, suitable for being screwed into the hole 23, and a hollow formed by two cylindrical chambers 25 and 27 joined by a truncated cone connecting portion 26. The chamber 27 which is the innermost and has a smaller diameter, is designed to hold therein a bulb-like temperature sensor 32, shown in Fig. 4, that is connected to a connector 29 with a cable 30. The connector is meant to be inserted in the cylindrical chamber 25 communicating with the outside through an opening 28.

The connector 29 seals the double hollow when inserted therein and it is fitted with radial locking teeth 33 for spring-mounting in a connector 34 delivering the gauged temperature signal to the onboard instrumentation of the train.

As for the shoe 21, also the support 24 is preferably made out of a metal such as copper, which is an excellent thermal conductor.

To prevent vibrations from loosening the threaded couplings, the support 24 and the shoe 21 can be welded together; the same solution may also be suitable for fixing the pins 14 to the annular shield 10.

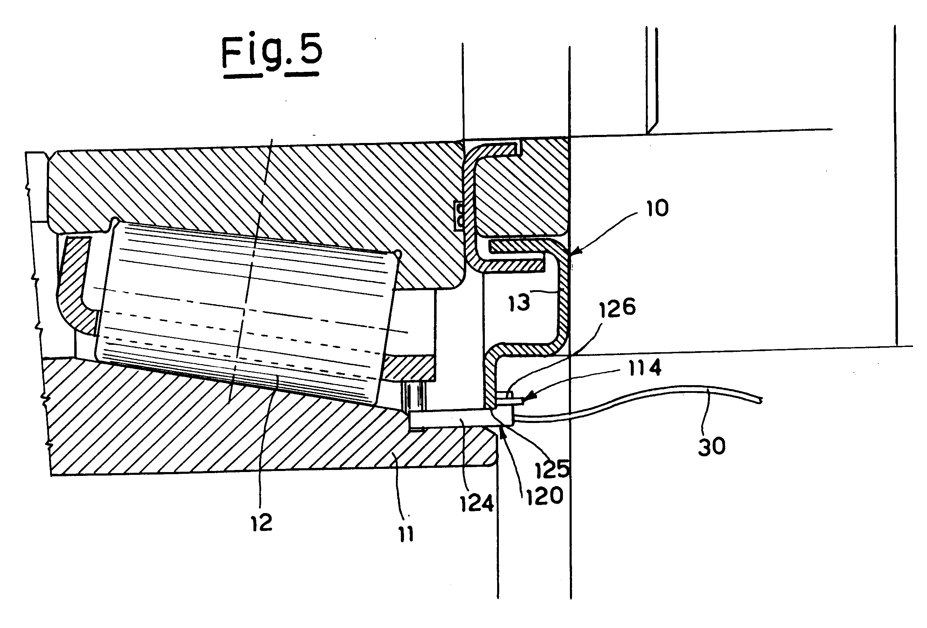

An embodiment which is alternative to the one of Figures 1 to 4 is shown in Figure 5, where the sensor is internal with respect to the shield 10, in an intermediate position between the races of the bearing and the annular sealing shield. With reference to Figure 5, a temperature gauging device 120 comprising a hollow cylindrical support 124 with a temperature sensor similar to the one previously described, is slipped in a hole 125 expressly obtained in the shield 10. The device 120 is suitably joined to the shield 10 by means of a threaded pin 114 that is slipped through a side lug bolt 126 of the same support.

According to another possible embodiment (not shown), the shoe 21 can be modified so as to lock on the annular shield 10 the support 24 and also a plug connected to a revolving speed gauging device, as disclosed in documents IT-A-67942/90 and IT-A-67943/90, both to the present Applicant. As in these cases the gauging device and relevant sensor is protected from the outside by an annular shield 10, the latter is provided with a rectangular opening, suitable for holding the plug. Therefore, also the shoe 21 has an opening corresponding to the other one, through which the gauging device's jack is introduced and then locked. In this variant, the hole 23 for holding the support 24 is preferably located in a decentralised position, closer to one of the holes 22 and leaving the larger rectangular opening a more central position.

According to a further embodiment (not shown), the support 24 and its sensor can be screwed in a threaded hole expressly obtained in the outer radial wall 13 of the annular shield 10. In this way, the threaded pins 14 and the shoe 21 are no more necessary.

The invention is not limited to the aforegoing description, which is to be considered purely as an illustration of the best method of implementing the device, and modifications are possible in terms of the shape, dimensions and arrangement of the parts and of the constructional and operational details. The invention includes all modifications which fall within its scope, as defined by the following claims.

## Claims

1. A temperature gauging device for rolling bearings, in particular for use on railway vehicle axles, the bearing comprising a sealing annular shield (10) fixed to the stationary race (11) of the bearing, the temperature gauging device comprising a sensor (32) electrically connected to on-board temperature indicator means; characterised in that the sensor (32) is mounted to said sealing shield (10) by an interposed support (24, 124) adapted for removing said sensor from said sealing shield.

2. The device of claim 1, wherein said support (24) is mounted proximate to an outer radial wall (13) of said annular sealing shield (10).

3. The device of claim 2, wherein said support (24) is mounted onto an outer radial wall (13) of said annular sealing shield (10).

4. The device of claim 1, wherein said support (24) is a hollow cylindrical body suitable for holding said sensor (32) therein; the support (24) being mounted to a hole (23) of a shoe (21) fitted to the shield (11).

5. The device of claim 4, wherein said support (24) has a threaded end portion (31) for screwing into said hole (23).

6. The device of claim 5, wherein said support (24) is provided with a hollow that is open (28) on the end opposite to said threaded end, said hollow being composed of two cylindrical chambers (25, 27) connected by a connecting portion (26) and suitable for holding said sensor (32).

7. The device of claim 6, wherein said temperature sensor (32) is located in one (27) of the two cylindrical chambers and is connected to a connector (29) to be located in said second cylindrical chamber (25); the connector (29) being provided with locking means (34) for spring-mounting to a further connector delivering the gauged temperature signal to the on-board instrumentation.

8. The device of claims 4 and 5, wherein the shoe (21) is provided with further holes (22) for slipping it onto pins (14) of the shield (10) to which it is fixed.

9. The device of claim 2, wherein the support (124) is slipped between the stationary race (11) and the shield (10) through a hole (125) obtained in said shield (10).

10. The device of claim 9, wherein the sensor (32) is located in an intermediate position between the races of the bearing and the annular sealing shield (10).

11. The device of claim 1, wherein said support (24, 124) is made of a material having a high thermal conductivity such as copper.

## Patentansprüche

1. Eine Vorrichtung zur Messung der Temperatur von Wälzlagern, insbesondere zur Verwendung auf Achsen von Eisenbahnwagen, wobei das Lager einen ringförmigen Dichtungsschild (10) umfaßt, der an dem feststehenden Ring (11) des Lagers befestigt ist, und wobei die Temperaturmeßvorrichtung einen Sensor (32) umfaßt, der mit bordinternen Temperaturanzeigemitteln elektrisch verbunden ist;
dadurch gekennzeichnet,
daß der Sensor (32) an dem Dichtungsschild (10) durch eine zwischengeschaltete Halterung (24, 124) befestigt ist, die geeignet ist, den Sensor von dem Dichtungsschild zu lösen.

2. Vorrichtung nach Anspruch 1,
dadurch gekennzeichnet,
daß die Halterung (24) nahe einer äußeren radialen Wand (13) des ringförmigen Dichtungsschilds (10) montiert ist.

3. Vorrichtung nach Anspruch 2,
dadurch gekennzeichnet,
daß die Halterung (24) auf einer äußeren radialen Wand (13) des ringförmigen Dichtungsschilds (10) montiert ist.

4. Vorrichtung nach Anspruch 1,
dadurch gekennzeichnet,
daß die Halterung (24) ein hohler zylindrischer Körper ist, der geeignet ist, den Sensor (32) in sich zu halten; und daß die Halterung (24) an einem Loch (23) eines Schuhs (21) montiert ist, der an dem Schild (10) befestigt ist.

5. Vorrichtung nach Anspruch 4,
dadurch gekennzeichnet,
daß die Halterung (24) einen mit Gewinde versehenen Endabschnitt (31) zum Einschrauben in das Loch (23) aufweist.

6. Vorrichtung nach Anspruch 5,
dadurch gekennzeichnet,
daß die Halterung (24) mit einem Hohlraum versehen ist, der an dem Ende gegenüber dem mit dem Gewinde versehenen Ende offen ist (28), wobei der Hohlraum aus zwei zylindrischen Kammern (25, 27) zusammengesetzt ist, die durch einen Verbindungsabschnitt (26) verbunden sind und geeignet sind, den Sensor (32) zu halten.

7. Vorrichtung nach Anspruch 6,
dadurch gekennzeichnet,
daß der Temperatursensor (32) in einer (27) der zwei zylindrischen Kammern angeordnet ist und mit einem Anschlußteil (29) verbunden ist, das in der zweiten zylindrischen Kammer (25) angeordnet sein soll; und daß das Anschlußteil (29) mit Verschlußmitteln (34) zu federnden Befestigung an einem weiteren Anschlußteil ausgestattet ist, das das gemessene Temperatursignal an die bordinternen Instrumente liefert.

8. Vorrichtung nach Ansprüchen 4 und 5,
dadurch gekennzeichnet,
daß der Schuh (21) mit weiteren Löchern (22) versehen ist, um ihn über Stifte (14) des Schilds (10) zu stülpen, auf dem er befestigt wird.

9. Vorrichtung nach Anspruch 2,
dadurch gekennzeichnet,
daß die Halterung (124) durch ein in dem Schild (10) enthaltenes Loch (125) zwischen den feststehenden Ring (11) und den Schild (10) eingeschoben wird.

10. Vorrichtung nach Anspruch 9,
dadurch gekennzeichnet,
daß der Sensor (32) in einer Mittelstellung zwischen den Ringen des Lagers und dem ringförmigen Dichtungsschild (10) angeordnet ist.

11. Vorrichtung nach Anspruch 1,
dadurch gekennzeichnet,
daß die Halterung (24, 124) aus einem Material mit hoher Wärmeleitfähigkeit wie z.B. Kupfer besteht.

## Revendications

1. Dispositif de mesure de température destiné à des paliers à roulement, en particulier pour utilisation sur des essieux de véhicules de chemins de fer, le palier comprenant un écran annulaire d'étanchéité (10) fixé au chemin de roulement fixe (11) du palier, le dispositif de mesure de température comprenant un capteur (32) relié électriquement à un moyen d'indication de température embarqué ; caractérisé en ce que le capteur (32) est monté sur l'écran d'étanchéité (10) grâce à un support interposé (24, 124) agencé pour enlever ledit capteur dudit écran d'étanchéité.

2. Dispositif selon la revendication 1, dans lequel le support (24) est monté à proximité d'une paroi radiale extérieure (13) de l'écran annulaire d'étanchéité (10).

3. Dispositif selon la revendication 2, dans lequel le support (24) est monté sur une paroi radiale extérieure (13) de l'écran annulaire d'étanchéité (10).

4. Dispositif selon la revendication 1, dans lequel le support (24) est un corps cylindrique creux approprié pour maintenir le capteur (32) dans celui-ci; ledit support (24) étant monté dans un trou (23) d'une semelle (21) fixée à l'écran (11).

5. Dispositif selon la revendication 4, dans lequel le support (24) comporte une partie d'extrémité filetée (31) destinée à être vissée dans le trou (23).

6. Dispositif selon la revendication 5, dans lequel le support (24) a un logement creux ménagé dans celui-ci, lequel est ouvert (28) à l'extrémité opposée à l'extrémité filetée, ledit logement creux étant constitué de deux chambres cylindriques (25, 27) raccordées par une partie de raccordement (26) et approprié pour maintenir ledit capteur (32).

7. Dispositif selon la revendication 6, dans lequel le capteur de température (32) est disposé dans une (27) des deux chambres cylindriques, et est connecté à un connecteur (29) qui doit être disposé dans la seconde chambre cylindrique (25) ; le connecteur (29) étant muni d'un moyen de blocage (34) pour montage par suspension élastique avec un autre connecteur délivrant le signal de température mesurée par l'instrument de mesure embarqué.

8. Dispositif selon la revendication 4 ou 5, dans lequel d'autres trous (22) sont ménagés dans la semelle (21) pour faire glisser celle-ci sur les goujons (14) de l'écran (10) auquel elle est fixée.

9. Dispositif selon la revendication 2, dans lequel le support (124) est amené à glisser entre le chemin de roulement fixe (11) et l'écran (12), à travers un trou (125) ménagé à cet effet dans ledit écran (12).

10. Dispositif selon la revendication 9, dans lequel le capteur (32) est disposé dans une position intermédiaire située entre les chemins de roulement du palier et l'écran annulaire d'étanchéité (10).

11. Dispositif selon la revendication 1, dans lequel le support (24, 124) est constitué d'un matériau présentant une conductivité thermique élevée, tel que du cuivre.
